(19) Europäisches Patentamt
European Patent Office
Office européen des brevets

(11)  **EP 2 094 520 B1**

(12)  **EUROPÄISCHE PATENTSCHRIFT**

(45) Veröffentlichungstag und Bekanntmachung des Hinweises auf die Patenterteilung:
**02.02.2011  Patentblatt 2011/05**

(21) Anmeldenummer: **07822606.5**

(22) Anmeldetag: **15.11.2007**

(51) Int Cl.:
**B60K 28/16** *(2006.01)*  **F16D 48/06** *(2006.01)*

(86) Internationale Anmeldenummer:
**PCT/EP2007/062359**

(87) Internationale Veröffentlichungsnummer:
**WO 2008/061927 (29.05.2008 Gazette 2008/22)**

(54)  **Verfahren zur Erkennung des Kupplungszustandes im Antriebsstrang eines Kraftfahrzeugs**

Method for detecting the status of the clutch in the drive train of a motor vehicle

Procédé de reconnaissance de l'état d'accouplement des organes de transmission d'un véhicule automobile

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.11.2006  DE 102006054702**

(43) Veröffentlichungstag der Anmeldung:
**02.09.2009  Patentblatt 2009/36**

(73) Patentinhaber: **Robert Bosch GmbH**
**70442 Stuttgart (DE)**

(72) Erfinder: **WANDEL, Helmut**
**71706 Markgroeningen (DE)**

(56) Entgegenhaltungen:
**EP-A- 0 922 604      EP-A- 1 332 909**
**DE-A1-102004 012 158    FR-A- 2 881 491**

**Beschreibung**

Die Erfindung bezieht sich auf ein Verfahren zur Erkennung des Kupplungszustandes im Antriebsstrang eines Kraftfahrzeugs nach dem Oberbegriff des Anspruches 1.

Stand der Technik

In der DE 102 38 464 A1 wird ein Verfahren zur Erkennung des Kupplungszustandes während einer Motorschleppmomentenregelung beschrieben. Da beim Zurückschalten des Getriebes von höherem Gang in niedrigerem Gang oder abrupter Gaswegnahme auf glatter Fahrbahn die Antriebsräder eines Fahrzeugs aufgrund der Bremswirkung des Motors einen Schlupf aufbauen können, wird in der Motorschleppmomentenregelung ein zusätzliches Motormoment erzeugt, welches der Schlupfbildung am Antriebsrad entgegenwirkt. Während der von der Motorschleppmomentenregelung erzeugten Erhöhung des Motormomentes muss aber sichergestellt sein, dass die Kupplung im Antriebsstrang geschlossen ist, da im ausgekuppelten Zustand die Motormomentenerhöhung nur zu einem Aufheulen des Motors führen würde, der in diesem Augenblick nicht unter Last steht, so dass eine Momentenübertragung auf das anzutreibende Rad nicht möglich wäre.

Zur Erkennung des Kupplungszustandes ist gemäß der DE 102 38 464 A1 vorgesehen, die Motorgeschwindigkeit und eine Radgeschwindigkeit zu ermitteln und daraus ein Übersetzungsverhältnis zu berechnen. Aus einem Vergleich des Übersetzungsverhältnisses mit einem abgespeicherten Grenzwert kann der Kupplungszustand erkannt werden. Es handelt sich bei diesem Grenzwert um einen fest vorgegebenen Schwellenwert, der fahrzeugindividuell in einem Steuergerät hinterlegt werden muss.

Aus der FR-A-2 881 491 ist ein Verfahren zur Erkennung eines Kupplungszustandes in Kraftfahrzeugen bekannt. Dabei wird aus einem Signal, welches ein Verhältnis von Fahrzeuggeschwindigkeit zu Motordrehzahl repräsentiert, sowie einem Signal, welches die zeitliche Ableitung der Motordrehzahl repräsentiert, ein den Kupplungszustand repräsentierendes Signal ermittelt.

Die Merkmale der Oberbegriffe der unabhängigen Ansprüche sind der FR-A-2 881 491 entnommen.

Offenbarung der Erfindung

Der Erfindung liegt die Aufgabe zugrunde, ein mit einfachen Maßnahmen zu realisierendes und variabel einsetzbares Verfahren zur Erkennung des Kupplungszustandes im Antriebsstrang eines Kraftfahrzeuges anzugeben.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Erkennung des Kupplungszustandes im Antriebsstrang eines Kraftfahrzeuges wird aus der Motordrehzahl des Antriebsmotors und einer Geschwindigkeit, insbesondere einer Achsgeschwindigkeit oder Kardangeschwindigkeit oder Fahrzeuggeschwindigkeit, ein Übersetzungsverhältnis aus Motordrehzahl und Geschwindigkeit, insbesondere aus einem Quotienten von Motordrehzahl und Fahrzeuggeschwindigkeit, gebildet und dem Vergleich mit einem Referenzwert zugrunde gelegt. Der Kupplungszustand bestimmt sich aus dem Größenverhältnis zwischen dem aktuellen Übersetzungsverhältnis und dem Referenzwert. Erfindungsgemäß ist vorgesehen, dass der Referenzwert mit dem Übersetzungsverhältnis aus einem ersten Zeitschritt gleichgesetzt und anschließend in einem nachfolgenden Zeitschritt die Differenz zwischen dem aktuellen Übersetzungsverhältnis und dem Referenzwert gebildet wird. Überschreitet diese Differenz einen Grenzwert, befindet sich die Kupplung im ausgekuppelten Zustand, andernfalls im eingekuppelten Zustand.

Der Vorteil dieser Vorgehensweise liegt in der variablen Bestimmung des Referenzwertes für das aus Motordrehzahl und Geschwindigkeit gebildete Übersetzungsverhältnis. Der Referenzwert wird in einem Initialisierungsschritt belegt, und zwar mit dem Wert des Übersetzungsverhältnisses aus einem ersten Zeitschritt. Ändert sich in einem der darauf folgenden Zeitschritte der Wert des aktuellen Übersetzungsverhältnisses und überschreitet die Differenz zum Referenzwert einen vorgegebenen Grenzwert, so kann davon ausgegangen werden, dass sich der Antriebsstrang im ausgekuppelten Kupplungszustand befindet. Daraufhin können entsprechende weitere Maßnahmen ergriffen werden, um dem ausgekuppelten Kupplungszustand Rechnung zu tragen. Diese Maßnahmen betreffen insbesondere eine Motorschleppmomentenregelung MSR.

Im Unterschied zu bekannten Verfahren aus dem Stand der Technik wird der Referenzwert nicht mehr vorab als festgelegter Wert in dem Steuergerät abgespeichert, sondern während des laufenden Verfahrens aus aktuellen Werten ermittelt. Dies macht das Verfahren flexibel anwendbar auf unterschiedliche Fahrzeuge bzw. Fahrzeugtypen, da keine fest vorgegebenen Referenzwerte mehr erforderlich sind, die bislang für verschiedene Gangstufen des Fahrzeuges ermittelt werden mussten. Der Referenzwert wird nunmehr im laufenden Prozess aus dem Algorithmus bestimmt.

Die Erkennung des Kupplungszustandes wird für die Motorschleppmomentenregelung MSR eingesetzt, darüber hinaus sind aber auch weitere Anwendungsfälle insbesondere für sonstige Fahrerassistenzsysteme wie Antriebsschlupfregelung ASR, elektronische Stabilitätssysteme ESP, Antiblockiersysteme ABS oder sonstige Systeme denkbar. Im Falle einer Motorschleppmomentenregelung wird diese bei erkanntem ausgekuppeltem Zustand deaktiviert, um eine Erhöhung des Motormomentes während des Schaltvorgangs auszuschließen. Sobald ein eingekuppelter Zustand vorliegt, wird die Motorschleppmomentenregelung wieder aktiviert, um ein zusätzliches, die Fahrstabilität des Fahrzeuges erhöhendes Motormoment zu generieren, welches einem in Schlupf geratenen Antriebsrad zuzuführen ist.

Vorteilhafterweise wird der Referenzwert in einem rekursiven Algorithmus fortlaufend aktualisiert. Hierbei wird der Referenzwert mit dem Übersetzungsverhältnis gleichgesetzt, sofern im Anschluss an einen ausgekuppelten Kupplungszustand wieder auf einen eingekuppelten Kupplungszustand erkannt wird. In diesem Fall ist von einem erfolgten Gangwechsel auszugehen, wobei der neu eingelegten Gangstufe ein neuer Referenzwert zugeordnet wird, der dem für diese Gangstufen erstmalig berechneten Übersetzungsverhältnis entspricht. Entfernt sich im weiteren Verlauf das Übersetzungsverhältnis von diesem neuen Referenzwert über ein zusätzliches Maß hinaus, ist wiederum von einem ausgekuppelten Zustand auszugehen, woraufhin die entsprechenden Maßnahmen erneut ergriffen werden, insbesondere die Motorschleppmomentenregelung wieder deaktiviert wird. Auf diese Weise entsteht ein rekursiver Algorithmus, der der jeweils aktuell eingelegten Gangstufe Rechnung trägt, indem jeder Gangstufe ein Referenzwert aus dem aktuell nach Einlegung dieser Gangstufe ermittelten Übersetzungsverhältnis zugeordnet wird.

Während die Erkennung des ausgekuppelten Zustandes über einen Vergleich zwischen dem aktuellen Übersetzungsverhältnis und dem zugeordneten Referenzwert erfolgt, wobei die Auskupplung festgestellt wird, falls die Differenz einen Grenzwert überschreitet, liegt ein eingekuppelter Zustand zweckmäßig für den Fall vor, dass die Differenz zwischen dem aktuellen Übersetzungsverhältnis und dem Übersetzungsverhältnis aus dem unmittelbar davor liegenden Zeitschritt einen Grenzwert unterschreitet. Im eingekuppelten Zustand, also bei einem durchgehenden Kraftfluss zwischen dem Antriebsmotor und den angetriebenen Rädern, ist die Differenz zwischen den Übersetzungsverhältnissen in zwei unmittelbar aufeinander folgenden Zeitschritten entweder gleich oder ungefähr gleich Null, zumindest aber kleiner als verhältnismäßig kleiner Grenzwert, da bei durchgehendem Kraftfluss zwischen den unmittelbar aufeinander folgenden Zeitschritten praktisch keine Änderung des Übersetzungsverhältnisses zu erwarten ist. Dieses Kriterium kann daher herangezogen werden, um den eingekuppelten Zustand festzustellen. Da zwei aufeinander folgende Übersetzungsverhältnisse miteinander verglichen werden und das Übersetzungsverhältnis rechnerisch bestimmt wird, ist ebenso wie bei der Erkennung des ausgekuppelten Zustandes keine fahrzeugspezifische Vorgabe von Referenzwerten erforderlich, wodurch das Verfahren mit geringem Aufwand an das jeweilige Fahrzeug adaptiert werden kann. Erforderlich ist lediglich die Vorgabe des Grenzwertes für die Differenz der Übersetzungsverhältnisse in zwei unmittelbar aufeinander folgenden Zeitschritten.

In bevorzugter Ausführung wird sowohl für das Erkennen des ausgekuppelten Zustandes als auch für das Erkennen des eingekuppelten Zustandes jeweils der Betrag der Differenz zwischen zwei Übersetzungsverhältnissen betrachtet. Dies hat den Vorteil, dass die Richtung der Änderung im Übersetzungsverhältnis außer Betracht bleibt; demnach werden Änderungen mit einem ansteigenden Übersetzungsverhältnis - entspricht einer höheren Motordrehzahl bzw. einer geringeren Geschwindigkeit - in gleicher Weise erfasst wie abfallende Übersetzungsverhältnisse - dies entspricht einer abfallenden Motordrehzahl bzw. einer ansteigenden Geschwindigkeit.

Die Erkennung des eingekuppelten Zustandes kann zusätzlich zu der Betrachtung der Differenz zwischen den Übersetzungsverhältnissen in zwei unmittelbar aufeinander folgenden Zeitschritten an weitere Bedingungen geknüpft sein. So ist es beispielsweise zweckmäßig, nur dann einen eingekuppelten Zustand festzustellen, wenn die betrachtete Differenz den zugeordneten Grenzwert über einen Mindestzeitraum unterschreitet. Außerdem soll die Motordrehzahl vorzugsweise oberhalb einer Mindestdrehzahl liegen, bei der es sich insbesondere um die Leerlaufdrehzahl handelt; hiermit soll sichergestellt werden, dass die Motorschleppmomentenregelung nur stattfinden kann, wenn der Motor mit höherer Drehzahl läuft.

Gemäß zweckmäßiger Weiterbildung wird das Signal des Übersetzungsverhältnisses, das durch Division der Motordrehzahl mit der Geschwindigkeit gebildet wird, mit einem Verzögerungsglied erster Ordnung ($PT_1$-Glied) gefiltert. Aufgrund dieser Filterung ist das Signal im eingekuppelten Zustand verhältnismäßig konstant und gibt die tatsächliche Getriebeübersetzung auch für den Fall von Störungen oder Radschwingungen, die beispielsweise im Fall einer ABS-Bremsung auftreten können, gut wieder.

Als Geschwindigkeitswert, welcher der Ermittlung des Übersetzungsverhältnisses zugrunde gelegt wird, wird bevorzugt die mittlere Antriebsachsgeschwindigkeit verwendet. Grundsätzlich kommen aber auch sonstige Längsgeschwindigkeitswerte in Betracht, beispielsweise die Geschwindigkeit im Schwerpunkt des Fahrzeuges oder im Bereich der Räder.

Das erfindungsgemäße Verfahren lässt sich besonders vorteilhaft in einem Fahrzeug mit einer Brennkraftmaschine als Antriebsmotor einsetzen. Des Weiteren wird das Verfahren insbesondere bei Fahrzeugen mit einem Handschaltgetriebe verwendet, wobei grundsätzlich auch ein Einsatz in Fahrzeugen mit Getriebeautomaten in Betracht kommt, bei denen zwischen verschiedenen Gangstufen gewechselt wird.

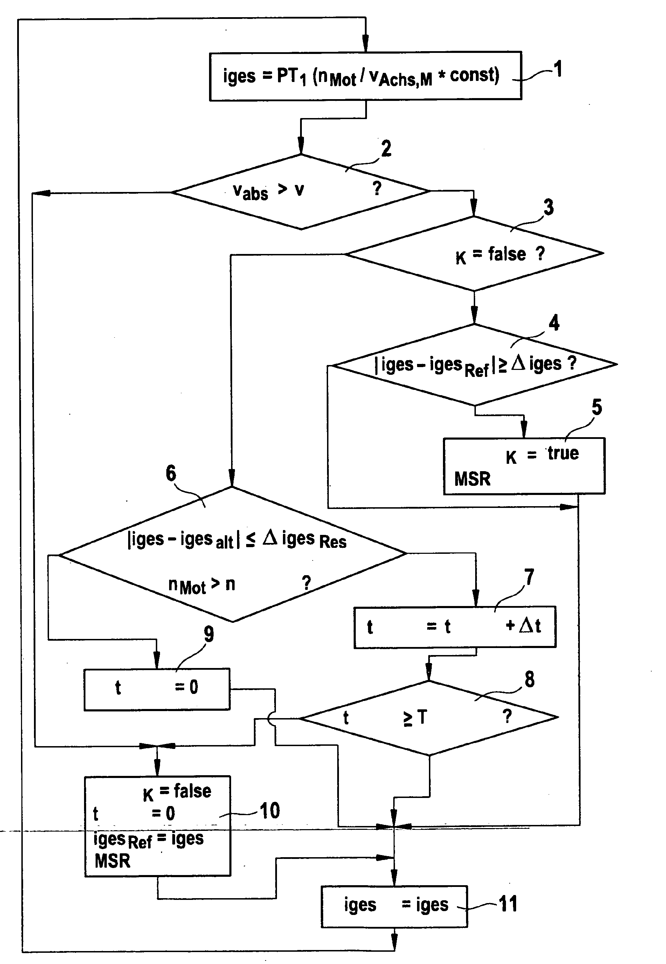

Weitere Vorteile und zweckmäßige Ausführungen sind den weiteren Ansprüchen, der Figurenbeschreibung und den Zeichnungen zu entnehmen. Die Figur zeigt ein Blockschaltbild mit dem Ablauf eines Verfahrens zur Erkennung des Kupplungszustandes im Antriebsstrang eines Kraftfahrzeugs.

In Verfahrensschritt 1 wird zunächst das Übersetzungsverhältnis iges für den Antriebsstrang aus dem Quotienten der Motordrehzahl $n_{Mot}$ und der mittleren Achsgeschwindigkeit $V_{Achs,M}$ ermittelt. Dieser Quotient wird zusätzlich mit einer konstanten const multipliziert, zudem erfolgt eine Filterung des Signales mit einem Verzögerungsglied erster Ordnung ($PT_1$-Glied). Die $PT_1$-Filterung stellt einen geglätteten Verlauf des Signales sicher. Das Übersetzungsverhältnis iges wird bei jedem Durchlauf des Verfahrens von neuem ermittelt.

Im nächsten Verfahrensschritt 2 erfolgt eine Geschwindigkeitsabfrage. Es wird überprüft, ob die aktuelle Absolutgeschwindigkeit $v_{abs}$ des Fahrzeuges, bezogen auf den Fahrzeugschwerpunkt, einen vorgegebenen Geschwindigkeits-Schwellenwert $v_{Schwelle}$ überschreitet, der beispielsweise auf einen Wert von 5,55 m/sec festgelegt wird. Nur oberhalb dieses Geschwindigkeitsschwellenwertes $v_{Schwelle}$ ist die Auskuppelerkennung aktiviert. Dementsprechend wird bei einer Fahrzeuggeschwindigkeit $v_{abs}$ unterhalb des Schwellenwertes der Nein-Verzweigung folgend zum Verfahrensschritt 10 fortgefahren, in dem eine Initialisierung von Parametern und Kenngrößen durchgeführt wird, die zur nachfolgenden Durchführung der Auskuppelerkennung erforderlich sind. Es ist auf diese Weise sichergestellt, dass beim Anfahren des Fahrzeuges die für die Auskuppelerkennung benötigten Initialisierungswerte festgelegt werden, die für die nachfolgenden Verfahrensschritte benötigt werden.

Im Verfahrensschritt 10 wird zunächst ein Parameter $Schalt_K$, der den Kupplungszustand darstellt und als logisches Flag ausgeführt ist, auf den Wert "false" gesetzt. Dieser Wert $Schalt_K$ =false bedeutet für die Zwecke des Verfahrens, dass von einem eingekuppelten Kupplungszustand ausgegangen wird. Bei $Schalt_K$=true wird dagegen von einem ausgekuppelten Zustand ausgegangen.

Des Weiteren wird im Block 10 ein Zeitzähler $t_{Schalt}$ auf den Wert Null gesetzt. Außerdem wird ein Referenzwert $iges_{Ref}$ für das Übersetzungsverhältnis auf den aktuellen Wert iges des Übersetzungsverhältnisses gesetzt, wodurch der Referenzwert $igeS_{Ref}$ initialisiert ist. Schließlich wird im Verfahrensschritt 10 die Motorschleppmomentenregelung MSR grundsätzlich aktiviert, so dass eine Motorschleppmomentenregelung durchgeführt werden kann, sofern die weiteren Voraussetzungen für die Durchführung der MSR-Regelung vorliegen.

Nach dem Durchlaufen des Verfahrensschrittes 10 wird zum Verfahrensschritt 11 fortgefahren, in welchem als weiterer Parameter der Wert für $iges_{alt}$ mit dem aktuellen Übersetzungsverhältnis iges gleichgesetzt und hierdurch initialisiert wird. Dieser Parameter $igeS_{alt}$ wird für die Abfrage gemäß Verfahrensschritt 6 benötigt, ob im Anschluss auf den ausgekuppelten Getriebezustand wieder von einem eingekuppelten Zustand ausgegangen werden kann.

Nach der Initialisierung im Verfahrensschritt 11 wird wieder zum Beginn des Verfahrens zurückgekehrt und im Verfahrensschritt 1 eine erneute, aktuelle Berechnung des Übersetzungsverhältnisses iges durchgeführt. Das gesamte Verfahren wird zyklisch durchlaufen, typischerweise mit einem Zeitintervall $\Delta t$ von 0.02 sec.

Unter der Voraussetzung, dass die Fahrzeuggeschwindigkeit $v_{abs}$ mittlerweile den zugeordneten Geschwindigkeits-Schwellenwert $v_{Shwelle}$ überschritten hat, wird im Verfahrensschritt 2 der Ja-Verzweigung folgend zur nächsten Abfrage im Verfahrensschritt 3 fortgefahren, in der überprüft wird, ob der Kupplungszustand $Schalt_K$ auf den Wert "false" gesetzt ist. Sofern dies der Fall ist, wird von einem eingekuppelten Zustand ausgegangen, also von einem durchgehenden Kraftfluss im Antriebsstrang, und der Ja-Verzweigung folgend zum nächsten Verfahrensschritt 4 fortgefahren. Im Verfahrensschritt 4 erfolgt eine Abfrage, ob die Bedingungen für den eingekuppelten Zustand noch vorliegen. Dies wird überprüft anhand der Beziehung

$$\left| iges - iges_{\mathrm{Re}f} \right| \geq \Lambda iges \;\; ,$$

gemäß der abgeprüft wird, ob der Betrag der Differenz von aktuellem Übersetzungsverhältnis iges und Referenzwert $iges_{Ref}$ des Übersetzungsverhältnisses größer oder gleich einem Auskuppel-Grenzwert $\Delta iges$ ist, der im System vorteilhafterweise fest vorgegeben ist. Mit dieser Abfrage wird überprüft, ob sich das Übersetzungsverhältnis so signifikant geändert hat, dass von einem aktuell durchgeführten Schaltvorgang mit ausgekuppelter Kupplung im Antriebsstrang ausgegangen werden muss. Sofern dies der Fall ist, wird der Ja-Verzweigung folgend zum nächsten Verfahrensschritt 5 fortgefahren, in welchem der Kupplungszustand $Schalt_K$ auf den Wert "true" gesetzt wird, was bedeutet, dass der Antriebsstrang sich im ausgekuppelten Zustand befindet. Des Weiteren wird im Verfahrensschritt 5 die Motorschleppmomentenregelung MSR deaktiviert, um eine Motormomentenerhöhung und ein unerwünschtes Aufheulen des Motors auszuschließen.

Im weiteren Verlauf wird zum Verfahrensschritt 11 fortgefahren, wo nach jedem Durchlauf des Verfahrens der Parameter $iges_{alt}$ auf dem aktuellen Wert iges des Übersetzungsverhältnisses gesetzt wird.

Ergibt die Abfrage im Verfahrensschritt 3, dass der Parameter $Schalt_K$ für den Kupplungszustand auf den Wert "true" gesetzt ist, befindet sich die Kupplung im ausgekuppelten Zustand und es wird der Nein-Verzweigung folgend zum Verfahrensschritt 6 fortgefahren, in dem eine Abfrage durchgeführt wird, ob der ausgekuppelte Zustand immer noch vorliegt. Dies wird anhand der Abfrage

$$\left| iges - iges_{alt} \right| \leq \Lambda iges_{\mathrm{Re}s} \;\; ,$$

überprüft, gemäß der der Betrag der Differenz aus aktuellem Übersetzungsverhältnis iges und dem Überset-

zungsverhältnis iges$_{alt}$ aus dem unmittelbar vorangegangenem Zeitschritt auf Unterschreitung eines Einkuppel-Grenzwertes $\Delta$iges$_{Res}$ für das Übersetzungsverhältnis überprüft wird. Wird der Einkuppel-Grenzwert $\Delta$iges$_{Res}$ unterschritten, so hat sich das Übersetzungsverhältnis in zwei aufeinander folgenden Zeitschritten nicht oder nur sehr wenig verändert, woraus auf den eingekuppelten Zustand geschlossen werden kann.

Allerdings ist diese Feststellung an zusätzliche Bedingungen geknüpft. Gemäß Verfahrensschritt 6 wird zusätzlich - gekennzeichnet durch ein logisches UND - überprüft, ob die Motordrehzahl n$_{Mot}$ der Brennkraftmaschine oberhalb der Leerlaufdrehzahl liegt. Hierdurch wird ausgeschlossen, dass im ausgekuppelten und eingeschwungenen Leerlaufzustand des Motors fälschlicherweise der Schalter Schalt$_K$ auf "false" und damit auf den Wert für eingekuppelten Zustand gesetzt wird.

Sofern die beiden Bedingungen im Verfahrensschritt 6 zutreffen, wird der Ja-Verzweigung folgend zum Verfahrensblock 7 fortgefahren, in welchem ein Zeitzähler t$_{Schalt}$ um ein Zeitintervall $\Delta$t hochgesetzt wird, bei dem es sich um die Taktrate handelt, mit der das gesamte Verfahren durchgeführt wird. Im nächsten Verfahrensschritt 8 erfolgt die Abfrage, ob der Zeitzähler t$_{Schalt}$ eine Mindestdauer T$_{Schalt,min}$ überschreitet. Diese Abfrage stellt sicher, dass die Rücksetzung des Kupplungszustandes Schalt$_K$ auf den Wert "false" nur durchgeführt wird, wenn die Bedingungen aus dem Verfahrensschritt 6 für eine bestimmte Mindestdauer erfüllt sind. Ist dies der Fall, wird der Ja-Verzweigung gefolgt und zum Verfahrensblock 10 fortgefahren, in welchem unter anderem der Schaltparameter Schalt$_K$ von "true" auf "false" gesetzt wird, so dass für den nächsten Verfahrensdurchlauf wieder von einem eingekuppelten Zustand ausgegangen wird.

Wird dagegen im Verfahrensschritt 8 erkannt, dass die Mindestdauer T$_{Schalt,min}$ noch nicht erreicht ist, wird der Nein-Verzweigung folgend unmittelbar zum Block 11 und anschließend zum Verfahrensanfang fortgefahren.

Ergibt die Abfrage im Verfahrensschritt 6, dass zumindest eine der beiden dort zu überprüfenden Bedingungen nicht erfüllt ist, wird der Nein-Verzweigung folgend zum Verfahrensschritt 9 fortgefahren, in welchem der Zeitzähler t$_{Schalt}$ auf den Ausgangswert Null gesetzt wird. Anschließend erfolgt die Fortführung des Verfahrens über den Verfahrensblock 11 und wieder zurück zum Verfahrensschritt 1. Eine Rücksetzung des Kupplungszustandes von "true" auf "false", also von ausgekuppelt zu eingekuppelt, wird dann in diesem Verfahrensdurchlauf noch nicht durchgeführt.

## Patentansprüche

1. Verfahren zur Erkennung des Kupplungszustandes im Antriebsstrang eines Kraftfahrzeugs, insbesondere während einer Motorschleppmomentenregelung (MSR), bei dem die Motordrehzahl (n$_{Mot}$) des Antriebsmotors und eine Geschwindigkeit (V$_{Achs, m}$), insbesondere eine Achsgeschwindigkeit, ermittelt wird, ein Übersetzungsverhältnis (iges) aus Motordrehzahl (n$_{Mot}$) und Geschwindigkeit (v$_{Achs, m}$) gebildet und aus einem Vergleich des Übersetzungsverhältnisses (iges) mit einem Referenzwert (iges$_{Ref}$) der Kupplungszustand (Schalt$_K$) bestimmt wird, wobei der Referenzwert (iges$_{Ref}$) mit dem Übersetzungsverhältnis (iges) aus einem ersten Zeitschritt gleichgesetzt und anschließend in einem nachfolgenden Zeitschritt die Differenz zwischen dem aktuellen Übersetzungsverhältnis (iges) und dem Referenzwert (iges$_{Ref}$) gebildet wird, wobei ein ausgekuppelter Kupplungszustand (Schalt$_K$) erkannt wird, falls die Differenz einen Grenzwert ($\Delta$iges) überschreitet, **dadurch gekennzeichnet, dass** die Motorschleppmomentenregelung (MSR) bei erkanntem ausgekuppeltem Kupplungszustand (Schalt$_K$) deaktiviert und bei eingekuppeltem Kupplungszustand (Schalt$_K$) aktiviert wird.

2. Verfahren nach Anspruch 1, **dadurch gekennzeichnet, dass** auf ausgekuppelten Kupplungszustand (Schalt$_K$) erkannt wird, falls der Betrag der Differenz zwischen dem aktuellen Übersetzungsverhältnis (iges) und dem Referenzwert (iges$_{Ref}$) den Grenzwert ($\Delta$iges) überschreitet.

3. Verfahren nach einem der Ansprüche 1 bis 2, **dadurch gekennzeichnet, dass** ein eingekuppelter Kupplungszustand (Schalt$_K$) erkannt wird, falls die Differenz zwischen dem aktuellen Übersetzungsverhältnis (iges) und dem Übersetzungsverhältnis (iges$_{alt}$) aus dem davor liegenden Zeitschritt einen Grenzwert ($\Delta$iges$_{Res}$) unterschreitet.

4. Verfahren nach Anspruch 3, **dadurch gekennzeichnet, dass** ein eingekuppelter Kupplungszustand (Schalt$_K$) erkannt wird, falls der Betrag der Differenz zwischen dem aktuellen Übersetzungsverhältnis (iges) und dem Übersetzungsverhältnis (iges$_{alt}$) aus dem davor liegend Zeitschritt den Grenzwert ($\Delta$iges$_{Res}$) unterschreitet.

5. Verfahren nach Anspruch 3 oder 4, **dadurch gekennzeichnet, dass** ein eingekuppelter Kupplungszustand (Schalt$_K$) erkannt wird, falls die Differenz zwischen dem aktuellen Übersetzungsverhältnis (iges) und dem Übersetzungsverhältnis (iges$_{alt}$) aus dem davorliegenden Zeitschritt den Grenzwert ($\Delta$iges$_{Res}$) während einer Mindestdauer (T$_{Schalt,min}$) unterschreitet.

**6.** Verfahren nach einem der Ansprüche 3 bis 5, **dadurch gekennzeichnet, dass** nur dann ein eingekuppelter Kupplungszustand (Schalt$_K$) erkannt wird, falls die aktuelle Motordrehzahl (n$_{Mot}$) eine Mindestdrehzahl (n$_{Leerlauf}$) überschreitet.

**7.** Verfahren nach einem der Ansprüche 1 bis 6, **dadurch gekennzeichnet, dass** der Referenzwert (iges$_{Ref}$) mit dem Übersetzungsverhältnis (iges) gleichgesetzt wird, falls im Anschluss an einen ausgekuppelten Kupplungszustand (Schalt$_K$) wieder auf einen eingekuppelten Kupplungszustand (Schalt$_K$) erkannt wird.

**8.** Verfahren nach einem der Ansprüche 1 bis 7, **dadurch gekennzeichnet, dass** das Signal des Übersetzungsverhältnisses (iges) mit einem Verzögerungsglied 1. Ordnung (PT$_1$-Glied) gefiltert wird.

**9.** Verfahren nach einem der Ansprüche 1 bis 8, **dadurch gekennzeichnet, dass** der Ermittlung des Übersetzungsverhältnisses (iges) die mittlere Antriebsachsgeschwindigkeit (v$_{Achs, m}$) zugrunde gelegt wird.

**10.** Verfahren nach einem der Ansprüche 1 bis 9, **dadurch gekennzeichnet, dass** die Erkennung des Kupplungszustandes (Schalt$_K$) nur bei einer Fahrzeuggeschwindigkeit (v$_{abs}$) größer als ein Geschwindigkeits-Schwellenwert (v$_{Schwelle}$) durchgeführt wird.

**11.** Verfahren nach Anspruch 1, **dadurch gekennzeichnet, dass** das Übersetzungsverhältnis (iges) abhängig von einem Quotienten aus Motordrehzahl (n$_{Mot}$) und Geschwindigkeit (v$_{Achs, m}$) gebildet wird, wobei sich das Übersetzungsverhältnis (iges) insbesondere aus einer Konstanten multipliziert mit dem Quotienten aus Motordrehzahl (n$_{Mot}$) und Geschwindigkeit (v$_{Achs, m}$) ergibt.

**12.** Regel- und/oder Steuergerät zur Durchführung des Verfahrens nach einem der Ansprüche 1 bis 10.

**Claims**

**1.** Method for detecting the clutch state in the drivetrain of a motor vehicle, in particular during engine drag torque regulation (MSR), in which method the engine rotational speed (n$_{Mot}$) of the drive engine and a speed (v$_{Achs,m}$), in particular an axle speed, are determined, a transmission ratio (iges) is formed from the engine rotational speed (n$_{Mot}$) and speed (v$_{Achs,m}$), and the clutch state (Schalt$_K$) is determined from a comparison of the transmission ratio (iges) with a reference value (iges$_{Ref}$), wherein the reference value (iges$_{Ref}$) is set equal to the transmission ratio (iges) from a first time step and subsequently, in a following time step, the difference between the present transmission ratio (iges) and the reference value (iges$_{Ref}$) is formed, with a disengaged clutch state (Schalt$_K$) being detected if the difference exceeds a limit value (Δiges), **characterized in that** the engine drag torque regulation (MSR) is deactivated when a disengaged clutch state (Schalt$_K$) is detected, and is activated in an engaged clutch state (Schalt$_K$).

**2.** Method according to Claim 1, **characterized in that** a disengaged clutch state (Schalt$_K$) is detected if the magnitude of the difference between the present transmission ratio (iges) and the reference value (iges$_{Ref}$) exceeds the limit value (Δiges).

**3.** Method according to one of Claims 1 and 2, **characterized in that** an engaged clutch state (Schalt$_K$) is detected if the difference between the present transmission ratio (iges) and the transmission ratio (iges$_{alt}$) from the preceding time step falls below a limit value (Δiges$_{Res}$).

**4.** Method according to Claim 3, **characterized in that** an engaged clutch state (Schalt$_K$) is detected if the magnitude of the difference between the present transmission ratio (iges) and the transmission ratio (iges$_{alt}$) from the preceding time step falls below the limit value (Δiges$_{Res}$).

**5.** Method according to Claim 3 or 4, **characterized in that** an engaged clutch state (Schalt$_K$) is detected if the difference between the present transmission ratio (iges) and the transmission ratio (iges$_{alt}$) from the preceding time step falls below the limit value (Δiges$_{Res}$) during a minimum time period (T$_{Schalt,min}$).

**6.** Method according to one of Claims 3 to 5, **characterized in that** an engaged clutch state (Schalt$_K$) is detected only if the present engine rotational speed (n$_{Mot}$) exceeds a minimum rotational speed (n$_{Leerlauf}$).

**7.** Method according to one of Claims 1 to 6, **characterized in that** the reference value (iges$_{Ref}$) is set equal to the transmission ratio (iges) if an engaged clutch state (Schalt$_K$) is detected again subsequently to a disengaged clutch state (Schalt$_K$).

**8.** Method according to one of Claims 1 to 7, **characterized in that** the signal of the transmission ratio (iges) is filtered using a first-order lag element (PT$_1$ element).

**9.** Method according to one of Claims 1 to 8,

**characterized in that** the determination of the transmission ratio (iges) is based on the average drive axle speed (V$_{Achs,m}$).

10. Method according to one of Claims 1 to 9, **characterized in that** the detection of the clutch state (Schalt$_K$) is carried out only at a vehicle speed (v$_{abs}$) higher than a speed threshold value (v$_{Schwelle}$).

11. Method according to Claim 1, **characterized in that** the transmission ratio (iges) is formed as a function of a quotient of engine rotational speed (n$_{Mot}$) and speed (v$_{Achs,m}$), with the transmission ratio (iges) being determined in particular from a constant multiplied by the quotient of engine rotational speed (n$_{Mot}$) and speed (v$_{Achs,m}$).

12. Regulating and/or control unit for carrying out the method according to one of Claims 1 to 10.

## Revendications

1. Procédé de reconnaissance de l'état d'accouplement dans la chaîne cinématique d'un véhicule automobile, notamment pendant une régulation du couple de glissement du moteur (MSR), dans lequel le régime du moteur (n$_{mot}$) du moteur d'entraînement et une vitesse (V$_{Achs, m}$), notamment une vitesse d'essieu, sont détectés, un rapport de multiplication (iges) du régime du moteur (n$_{mot}$) et de la vitesse (V$_{Achs, m}$) est formé et est déterminé à partir d'une comparaison du rapport de multiplication (iges) avec une valeur de référence (iges$_{Ref}$) de l'état d'embrayage (Schalt$_K$),
la valeur de référence (iges$_{Ref}$) étant égalisée avec le rapport de multiplication (iges) à partir d'une première étape temporelle, puis, dans une deuxième étape temporelle, la différence entre le rapport de multiplication (iges) actuel et la valeur de référence (iges$_{Ref}$) est formée, un état d'embrayage (Schalt$_K$) désembrayé étant reconnu si la différence dépasse une valeur limite ($\Delta$iges), **caractérisé en ce que** la régulation du couple de glissement du moteur (MSR), lorsqu'un état d'embrayage (Schalt$_K$) désembrayé est détecté, est désactivée, et est activée lorsque l'état d'embrayage (Schalt$_K$) est embrayé.

2. Procédé selon la revendication 1, **caractérisé en ce que** l'on reconnaît à partir de l'état d'embrayage (Schalt$_K$) désembrayé, si la valeur de la différence entre le rapport de multiplication (iges) actuel et la valeur de référence (iges$_{Ref}$) dépasse la valeur limite ($\Delta$iges).

3. Procédé selon l'une quelconque des revendications 1 à 2, **caractérisé en ce que** l'on reconnaît un état d'embrayage (Schalt$_K$) embrayé si la différence entre le rapport de multiplication (iges) actuel et le rapport de multiplication (iges$_{alt}$) provenant d'une étape temporelle antérieure est inférieure à une valeur limite ($\Delta$iges$_{Res}$).

4. Procédé selon la revendication 3, **caractérisé en ce que** l'on reconnaît un état d'embrayage (Schalt$_K$) embrayé si la valeur de la différence entre le rapport de multiplication (iges) actuel et le rapport de multiplication (iges$_{alt}$) provenant de l'étape temporelle antérieure est inférieure à la valeur limite ($\Delta$iges$_{Res}$).

5. Procédé selon la revendication 3 ou 4, **caractérisé en ce que** l'on reconnaît un état d'embrayage (Schalt$_K$) embrayé si la différence entre le rapport de multiplication (iges) actuel et le rapport de multiplication (iges$_{alt}$) provenant de l'étape temporelle antérieure est inférieure à la valeur limite ($\Delta$iges$_{Res}$) pendant au moins une durée minimale (T$_{Schalt,min}$).

6. Procédé selon l'une quelconque des revendications 3 à 5, **caractérisé en ce que** l'on ne reconnaît un état d'embrayage (Schalt$_K$) embrayé que si le régime du moteur (n$_{mot}$) actuel dépasse un régime minimum (n$_{Leerlauf}$).

7. Procédé selon l'une quelconque des revendications 1 à 6, **caractérisé en ce que** la valeur de référence (iges$_{Ref}$) est égalisée avec le rapport de multiplication (iges) si l'on reconnaît, à la suite d'un état d'embrayage (Schalt$_K$) débrayé, à nouveau un état d'embrayage (Schalt$_K$) embrayé.

8. Procédé selon l'une quelconque des revendications 1 à 7, **caractérisé en ce que** le signal du rapport de multiplication (iges) est filtré avec un facteur de retard de premier ordre (PT$_1$-Glied).

9. Procédé selon l'une quelconque des revendications 1 à 8, **caractérisé en ce que** l'on prend pour base la vitesse d'essieu d'entraînement moyenne (V$_{Achs, m}$) pour la détection du rapport de multiplication (iges).

10. Procédé selon l'une quelconque des revendications 1 à 9, **caractérisé en ce que** la reconnaissance de l'état d'embrayage (Schalt$_K$) n'est effectuée que dans le cas où la vitesse du véhicule (V$_{abs}$) est supérieure à une valeur de vitesse seuil (V$_{Schwelle}$).

11. Procédé selon la revendication 1, **caractérisé en**

**ce que** le rapport de multiplication (iges) est formé en fonction d'un quotient du régime du moteur ($n_{mot}$) et de la vitesse ($V_{Achs, m}$), le rapport de multiplication (iges) étant notamment obtenu par une constante multipliée par le quotient du régime du moteur ($n_{mot}$) et de la vitesse ($V_{Achs, m}$).

**12.** Appareil de régulation et/ou de commande pour mettre en oeuvre le procédé selon l'une quelconque des revendications 1 à 10.

$$iges = PT_1 (n_{Mot} / v_{Achs,M} * const)$$  —— 1

2

$$v_{abs} > v \qquad ?$$

3

$$K = false \ ?$$

4

$$|iges - iges_{Ref}| \geq \Delta iges \ ?$$

5

$$K = true$$
MSR

6

$$|iges - iges_{alt}| \leq \Delta iges_{Res}$$

$$n_{Mot} > n \qquad ?$$

7

$$t \qquad = t \qquad + \Delta t$$

9

$$t \qquad = 0$$

8

$$t \qquad \geq T \qquad ?$$

$$K = false$$
$$t \qquad = 0$$ —— 10
$$iges_{Ref} = iges$$
MSR

$$iges \qquad = iges$$ —— 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10238464 A1
- FR 2881491 A